# EUROPEAN PATENT SPECIFICATION

(11) **EP 4 516 390 B1**
(45) Date of publication and mention of the grant of the patent: **08.04.2026**
(21) Application number: 23937755.9
(22) Date of filing: 29.06.2023
(51) Int. Cl.: B01J 3/04, B01J 19/18, B01F 27/192, B01J 19/00, B01J 19/02

(54) **HIGH-PRESSURE REACTOR**
HOCHDRUCKREAKTOR
RÉACTEUR HAUTE PRESSION

(43) Date of publication of application: 05.03.2025
(73) Proprietor: PT ESG New Energy Material, Jakarta Selatan, Provinsi DKI Jakarta 12950 (ID); PT QMB New Energy Materials, Jakarta Selatan, Provinsi DKI Jakarta, 12950 (ID); GEM Co., Ltd., Bao'an Center Area, Bao'an, Shenzhen Guangdong 518101 (CN); PT Gem Indonesia New Energy Materials, Jakarta 12950 (ID)
(72) Inventor: BRODJONEGORO, Satryo Soemantri, Provinsi DKI Jakarta 12950 (ID); XU, Kaihua, Shenzhen, Guangdong 518101 (CN); WANG, Yi, Provinsi DKI Jakarta 12950 (ID); KRISTIYANTO, Evan Wahyu, Provinsi DKI Jakarta 12950 (ID); BAKING, Aad Alief Rasyidi, Provinsi DKI Jakarta 12950 (ID); AJI, Tegar Mukti, Provinsi DKI Jakarta 12950 (ID); WANALDI, Rizky, Provinsi DKI Jakarta 12950 (ID); HASIBUAN, Andi Syaputra, Provinsi DKI Jakarta 12950 (ID); SINAGA, Arnaldo Marulitua, Provinsi DKI Jakarta 12950 (ID)
(74) Representative: Santarelli
(86) International application number: PCT/CN2023/103767
(87) International publication number: WO 2025/000332

(56) References cited:
- WO-A1-2021/190279
- WO-A1-2021/190279
- CN-A- 102 676 801
- DE-A1- 4 421 478
- JP-A- 2014 057 955
- JP-A- 2018 118 208
- JP-A- 2018 130 690
- US-A1- 2015 086 450
- US-A1- 2015 086 450

## Description

### FIELD OF THE DISCLOSURE

The disclosure relates to the technical field of reactor, in particular to a high-pressure reactor.

### BACKGROUND

With the vigorous development of China's new-energy vehicle industry and the gradual depletion of high-quality nickel and cobalt mine resources in the country, the demand for Ni, Co, and Mn metals in ternary materials for new energy sources is rising steadily. As a result, the exploitation of laterite nickel ore, which has large reserves but low nickel grades, has gradually become a hot spot in the industry. The hydrometallurgical route involving sulfuric acid leaching under high-temperature and high-pressure conditions is currently one of the mainstream smelting processes for laterite nickel ore.

Reactor is a primary equipment for sulfuric acid leaching under high-temperature and high-pressure condition. For instance, a Chinese patent with application number CN201721318428.6 discloses a pressurized continuous hydrometallurgical reactor, which comprises: a horizontal reactor equipped with a feed pipe on one side and a discharge pipe on the other side, with more than one compartment inside the horizontal reactor. Inside the horizontal reactor, there are stirring devices, temperature control devices, heating devices, cooling devices, and pressure control devices, all controlled according to conventional methods. US 2015/086450 A1 describes an autoclave and the method for adding an ore slurry and the component for acid leaching into a single reactor with a bladed mixer. It explicitly states that the position of the vapour tube is indifferent.

Regarding the aforementioned existing technology, within horizontal high-pressure reactors, mixing of mineral slurry, steam, and acid is typically carried out using stirring devices. However, with traditional stirring structures, some materials with higher specific gravity tend to settle at the bottom, resulting in uneven distribution of materials in the vertical direction. Additionally, steam needs to be introduced to heat the newly injected mineral slurry to the required reaction temperature before a reaction can occur. The long heating time required for the mineral slurry, combined with the low degree of material mixing uniformity due to the uneven vertical distribution, leads to inefficient reaction processes. To date, no effective solutions have been proposed to address the issues associated with these related technologies.

### SUMMARY

The purpose of this disclosure is to provide a high-pressure reactor to solve the technical problems of long heating time for the slurry in the reaction and low material mixing uniformity in the existing technology.

In order to solve the above technical problems, this disclosure provides a high-pressure reactor, comprising:

a reactor, which is provided with a feed inlet at one end and a discharge outlet at the other end, the feed inlet is used for injecting slurry, steam, and acid, while the discharge outlet is used for discharging; inside the reactor, several partition plates are arranged sequentially along the direction of material flow; these partition plates divide the interior cavity of the reactor into multiple compartments; each compartment is equipped with a mixing device; the upper parts of any two adjacent compartments are connected;

a feed inlet, which comprises an ore pulp inlet, a steam inlet, and an acid inlet that are sequentially arranged circumferentially along the direction of stirring rotation with the mixing device as an axis; and,

a mixing device, which comprises a driving component, a propeller stirring paddle, and a disc disperser stirring paddle; the driving component is used to drive the rotation of the propeller stirring paddle and the disc disperser stirring paddle; the disc disperser stirring paddle is located above the propeller stirring paddle; the propeller stirring paddle is used to disturb and mix the materials and promote their upward movement; the disc disperser stirring paddle is used to tangentially disperse the upward-moving materials.

Furthermore, the ore pulp inlet comprises a first ore pulp port located near the acid inlet and a second ore pulp port located near the steam inlet.

Furthermore, a turbulence plate is installed within the compartment to disturb the flow trajectory of the internal fluid.

Furthermore, the turbulence plate is distributed on the inner walls surrounding the compartment.

Furthermore, a plurality of round holes are unevenly distributed on the turbulence plate, these round holes allow the slurry to accelerate through.

Furthermore, the bottom of the partition plate is provided with bottom holes for the slurry to pass through.

Furthermore, the upper heights of several partition plates decrease sequentially along the direction of material flow, causing the liquid levels of several compartments decrease sequentially along the direction of material flow.

Furthermore, a wear-resistant plate is installed on the inner bottom wall of the reactor.

Furthermore, the wear-resistant plate is made of titanium alloy.

Furthermore, the disc disperser stirring paddle is positioned below the liquid level of the compartment, while the propeller stirring paddle is located at the lower part of the compartment.

Furthermore, the driving component comprises a drive motor and a rotating shaft; the rotating shaft is connected to the output shaft of the drive motor, and both the propeller stirring paddle and the disc disperser stirring paddle are installed on the rotating shaft.

Furthermore, the reactor vessel of the reactor is divided into three layers from the inside out: a titanium alloy layer, an iron casting layer, and an insulating layer.

Furthermore, the thickness of the iron casting layer ranges from 30.5 to 95 mm.

Furthermore, the thickness of the titanium alloy layer is between 4 and 30 mm.

Furthermore, the thickness of the insulating layer is between 60 and 140 mm.

Furthermore, the impeller of the propeller stirring paddle has either three or four blades, and the angle of the blades is between 12 and 42 degrees.

Furthermore, the length of the blades is between 400 and 1500 mm.

Furthermore, the rotational speed of the propeller stirring paddle is between 0 and 960 rpm.

Furthermore, the thickness of the wear-resistant plate is between 4 and 30 mm.

Compared with existing technologies, the beneficial effects of this disclosure are:
(1) the first ore pulp port, second ore pulp port, steam inlet, and acid inlet are sequentially arranged around the mixing device according to the stirring direction of the mixing device; with this arrangement, after entering the reactor vessel, the ore pulp first comes into contact with steam under the stirring action of the mixing device and continues to heat up, then it encounters the acid and reacts with it; the reaction with the acid is exothermic, and the heat generated by the reaction is utilized to heat the newly incoming ore pulp;
(2) utilizing a dual-layer stirring paddle configuration, with a propeller stirring paddle positioned below and a disc disperser stirring paddle above, this setup lifts materials from the bottom and then disperses them, enhancing mixing efficiency and accelerating the reaction process;
(3) the turbulence plate disturbs the internal fluid and features round holes that allow a small portion of the slurry to pass through, accelerating the dispersion of materials behind the turbulence plate and preventing the formation of a wake zone;
(4) the compartment with a stepped liquid level, combined with bottom holes on the partition plate, promotes a faster flow velocity of the slurry;
(5) the thickness of the bottom of the reactor vessel is increased with titanium alloy plates to extend the time before the bottom is worn through.

### BRIEF DESCRIPTION OF THE DRAWINGS

FIG. 1 is a schematic diagram showing the overall structure of a high-pressure reactor according to an embodiment of this disclosure;
FIG. 2 is a front view of the high-pressure reactor according to an embodiment of this disclosure;
FIG. 3 is a top view of the high-pressure reactor according to an embodiment of this disclosure;
FIG. 4 is a left-side view of the high-pressure reactor according to an embodiment of this disclosure.

### DETAILED DESCRIPTION OF PREFERRED EMBODIMENTS

The preferred embodiments of this disclosure will be described in detail with reference to the accompanying drawings, which constitute a part of this disclosure and are used together with the embodiments to illustrate the principles of this disclosure, and are not intended to limit the scope of this disclosure.

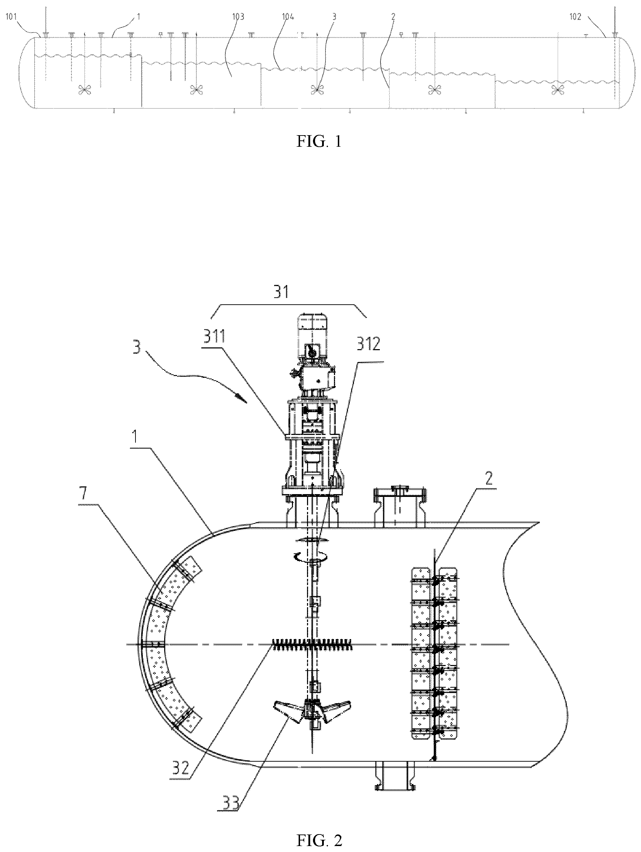

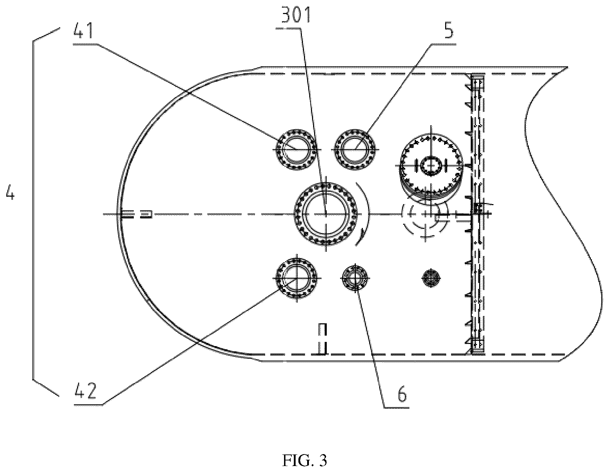

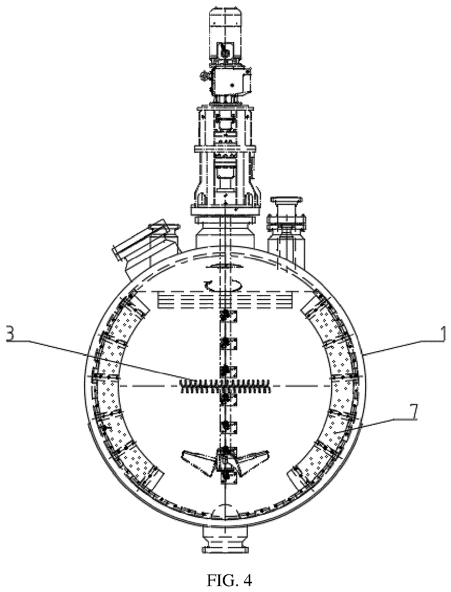

As shown in FIG. 1- FIG. 4, this disclosure provides a high-pressure reactor, comprising a reactor 1 with a feed inlet 101 at one end and a discharge outlet 102 at the other end. The feed inlet 101 is used for injecting slurry, steam, and acid, while the discharge outlet 102 is used for discharging. Inside the reactor 1, several partition plates 2 are arranged sequentially along the direction of material flow. These partition plates 2 divide the interior cavity of the reactor 1 into multiple compartments 103. Each compartment 103 is equipped with a mixing device 3. Additionally, the upper parts of any two adjacent compartments 103 are connected, and a rat-hole design is adopted at the bottom to allow materials to enter from the feed inlet 101, flow through each compartment 103 in sequence, and finally be discharged through the discharge outlet 102. Furthermore, within each compartment, the materials are mixed and stirred by the mixing device 3.

To achieve the effect of reducing the time required for slurry heating upon feeding at the feed inlet 101, the feed inlet 101 is located on the compartment 103 closest to feeding end. The feed inlet 101 comprises an ore pulp inlet 4, a steam inlet 5, and an acid inlet 6, which are sequentially arranged circumferentially along the direction of stirring rotation with the mixing device 3 as an axis. The ore pulp inlet 4 is used to inject slurry, the steam inlet 5 is used to inject high-temperature steam, and the acid inlet 6 is used to inject acid. Due to the circumferential arrangement of the ore pulp inlet 4, steam inlet 5, and acid inlet 6 along the stirring direction, under the stirring action of the mixing device 3, the slurry first contacts the steam and is heated to the reaction temperature before coming into contact with the acid to react with it. The reaction with acid is exothermic, and the heat generated by the reaction is utilized to preheat the subsequent slurry entering from the ore pulp inlet 4, thereby making use of the heat released by the reaction and reducing the time required for the slurry to be heated to the reaction temperature by steam.

Furthermore, to enhance the efficiency of mixing various materials and reduce material settlement, the mixing device 3 comprises a driving component 31, a propeller stirring paddle 32, and a disc disperser stirring paddle 33. The driving component 31 is used to drive the rotation of the propeller stirring paddle 32 and the disc disperser stirring paddle 33. The disc disperser stirring paddle 33 is located above the propeller stirring paddle 32. The propeller stirring paddle 32 is used to disturb and mix the materials and promote their upward movement. The disc disperser stirring paddle 33 is used to tangentially disperse the upward-moving materials to achieve further mixing. By using the propeller stirring paddle 32 to disturb and lift materials with a higher specific gravity from the bottom, the disc disperser stirring paddle 33 can perform high-speed tangential dispersion on the lifted materials. The coordinated action of the dual stirring paddles enhances mixing efficiency, thereby accelerating the reaction process.

During operation, the mixing device 3, in coordination with the circumferentially distributed ore pulp inlet 4, steam inlet 5, and acid inlet 6, stirs and produces a superimposed slurry heating effect, which shortens the time required for the slurry to reach the reaction temperature. Additionally, through the coordinated action of dual stirring, the mixing device 3 disrupts and brings larger particles from the bottom to the surface, while simultaneously dispersing these ascending particles at high speeds in a tangential direction. This efficient mixing of materials facilitates a rapid progression of the reaction.

The reactor vessel of the reactor 1 is divided into three layers from the inside out: a titanium alloy layer, an iron casting layer, and an insulating layer. The thickness of the iron casting layer ranges from 30.5 to 95 mm. The thickness of the titanium alloy layer is between 4 and 30 mm, and the thickness of the insulating layer is between 60 and 140 mm.

Additionally, the impeller of the propeller stirring paddle 32 has either three or four blades, and the angle of the blades is between 12 and 42 degrees. The length of the blades is between 400 and 1500 mm. The rotational speed of the propeller stirring paddle 32 is between 0 and 960 rpm.

It should be clarified that, depending on the capacity of the reactor vessel, each compartment 103 can be equipped with additional steam inlet 5, acid inlet 6, and vent port, as well as auxiliary tools such as thermometer and liquid level indicator, as appropriate.

In an embodiment, to enhance the slurry preheating effect, the ore pulp inlet 4 comprises a first ore pulp port 41 located near the acid inlet 6 and a second ore pulp port 42 located near the steam inlet 5. The slurry is divided into two streams and injected into the first ore pulp port 41 and the second ore pulp port 42, respectively. The slurry from the second ore pulp port 42 first contacts the steam, heated to the reaction temperature, and then comes into contact with the acid injected from the acid inlet 6, resulting in an exothermic reaction. This slurry then comes into contact with the slurry injected from the first ore pulp port 41. Since the first ore pulp port 41 is closer to the acid inlet 6, it can more quickly come into contact with the heat generated by the reaction and has a longer duration of contact with the steam injected from the steam inlet 5, thereby extending its preheating time. By injecting the slurry in a divided flow and connecting it in a circulatory manner, the exothermic reaction between the slurry and acid is fully utilized to achieve better heating efficiency.

It is understandable that by dividing the slurry into two streams, the slurry from the second ore pulp port 42 can more fully undergo heat exchange with the steam, while the slurry from the first ore pulp port 41 undergoes preheating under the exothermic reaction. This reduces the amount of heat that needs to be exchanged with steam subsequently, thereby achieving the effect of fully utilizing the exothermic reaction between the slurry and acid.

In an embodiment, in order to achieve a more uniform mixing of various materials, a turbulence plate 7 is installed within the compartment 103 to disturb the flow trajectory of the internal fluid. Under the action of the turbulence plate 7, the flow path of the materials is disrupted, achieving the effect of turbulent mixing.

Furthermore, to achieve a more thorough disturbance effect, the turbulence plate 7 is distributed on the inner walls surrounding the compartment 103.

Furthermore, to reduce the deposition and scaling of materials caused by the turbulence plate 7, a plurality of round holes 701 are unevenly distributed on the turbulence plate 7. These round holes 701 allow the slurry to accelerate through, helping to mitigate deposition and scaling.

It is understandable that when the turbulence plate 7 reaches a certain size, a large wake zone will form on the backside of the turbulence plate 7. Within the wake zone, the flow velocity is very low, which can lead to issues with material deposition and scaling. If the turbulence plate 7 is too small, the turbulence effect will not be significant. The round holes 701 allow the slurry to accelerate and penetrate through the turbulence plate 7. This creates an impact on the slurry after disturbance, accelerating the dispersion of materials behind the turbulence plate and preventing the formation of the wake zone.

In an embodiment, to achieve a faster flow velocity of the slurry between the compartments 103, the bottom of the partition plate 2 is provided with bottom holes for the slurry to pass through. These bottom holes form interconnected channels at the lower part of the compartments 103, allowing the slurry to flow through.

Furthermore, the upper heights of several partition plates 2 decrease sequentially along the direction of material flow, causing the liquid levels 104 of several compartments 103 decrease sequentially along the direction of material flow. This results in a pressure difference at the bottoms of the compartments 103, driving the slurry at the bottoms of the compartments 103 to flow through the bottom holes. This, in turn, generates a faster flow velocity for the slurry.

It is understandable that with increased slurry flow velocity and a fixed reaction time, the reactor vessel can be made larger, resulting in greater processing capacity.

It should be noted that the reaction between the slurry and acid continues from the moment the slurry enters the reactor 1 until it leaves the reactor 1. The high-pressure reactor 1 is designed in size to ensure that the time it takes for the slurry to flow through the reactor 1 is equal to or slightly greater than the time required for the slurry to fully react.

In an embodiment, to prolong the time before the bottom of the reactor 1 is worn through, a wear-resistant plate is installed on the inner bottom wall of the reactor 1.

Furthermore, the wear-resistant plate is made of titanium alloy, which has properties of acid corrosion resistance and wear resistance. Essentially, installing the wear-resistant plate is equivalent to increasing the thickness of the easily worn bottom of the reactor, thereby prolonging the time before it is worn through. The thickness of the wear-resistant plate is between 4 and 30 mm.

It should be noted that the titanium alloy plate is made of TA10 titanium alloy, and the wear-resistant plate is installed in specific areas at the bottom of the reactor 1.

In an embodiment, to ensure effective stirring in each compartment, the disc disperser stirring paddle 33 is positioned below the liquid level 104 of the compartment 103, while the propeller stirring paddle 32 is located at the lower part of the compartment 103. This arrangement allows stirring within the range of the liquid level 104, ensuring effective mixing in each compartment 103.

Furthermore, to achieve coaxial rotation, the driving component 31 comprises a drive motor 311 and a rotating shaft 312. The rotating shaft 312 is connected to the output shaft of the drive motor 311, and both the propeller stirring paddle 32 and the disc disperser stirring paddle 33 are installed on the rotating shaft. The rotating shaft 312 vertically extends downward from the top of the reactor 1, with the disc disperser stirring paddle 33 and the propeller stirring paddle 32 distributed on the rotating shaft 312 from top to bottom.

The workflow of this disclosure is as follows: The feed inlet 101 comprises an ore pulp inlet 4, a steam inlet 5, and an acid inlet 6, which are sequentially arranged circumferentially along the direction of stirring rotation with the mixing device 3 as an axis. the ore pulp inlet 4 comprises a first ore pulp port 41 located near the acid inlet 6 and a second ore pulp port 42 located near the steam inlet 5. The slurry is divided into two streams and injected into the first ore pulp port 41 and the second ore pulp port 42, respectively. With stirring, the ore pulp in the second ore pulp port 42 comes into contact with steam, rises in temperature to the reaction temperature, and reacts with acid. Due to the exothermic reaction, the ore pulp injected through the first ore pulp port 41 is preheated. During stirring, the propeller stirring paddle 32 lifts the material near the bottom of the compartment 103, and the disc disperser stirring paddle 33 tangentially distributes the lifted material at high speed for mixing. During the stirring and mixing process, the turbulence plate 7 creates turbulence in the material, and some of the slurry accelerates through the round holes 701, creating an impact on the turbulated slurry. This not only reduces material deposition and scaling but also enhances the turbulence effect.

## Claims

1. A high-pressure reactor, comprising:
a reactor, which is provided with a feed inlet at one end and a discharge outlet at the other end, the feed inlet is used for injecting slurry, steam, and acid, while the discharge outlet is used for discharging; inside the reactor, several partition plates are arranged sequentially along the direction of material flow; these partition plates divide the interior cavity of the reactor into multiple compartments; each compartment is equipped with a mixing device; the upper parts of any two adjacent compartments are connected;
a feed inlet, which comprises an ore pulp inlet, a steam inlet, and an acid inlet that are sequentially arranged circumferentially along the direction of stirring rotation with the mixing device as an axis; and,
a mixing device, which comprises a driving component, a propeller stirring paddle, and a disc disperser stirring paddle; the driving component is used to drive the rotation of the propeller stirring paddle and the disc disperser stirring paddle; the disc disperser stirring paddle is located above the propeller stirring paddle; the propeller stirring paddle is used to disturb and mix the materials and promote their upward movement; the disc disperser stirring paddle is used to tangentially disperse the upward-moving materials.

2. The high-pressure reactor according to claim 1, the ore pulp inlet comprises a first ore pulp port located near the acid inlet and a second ore pulp port located near the steam inlet.

3. The high-pressure reactor according to claim 1, a turbulence plate is installed within the compartment to disturb the flow trajectory of the internal fluid.

4. The high-pressure reactor according to claim 3, the turbulence plate is distributed on the inner walls surrounding the compartment.

5. The high-pressure reactor according to claim 4, a plurality of round holes are unevenly distributed on the turbulence plate, these round holes allow the slurry to accelerate through.

6. The high-pressure reactor according to claim 1, the bottom of the partition plate is provided with bottom holes for the slurry to pass through.

7. The high-pressure reactor according to claim 6, the upper heights of several partition plates decrease sequentially along the direction of material flow, causing the liquid levels of several compartments decrease sequentially along the direction of material flow.

8. The high-pressure reactor according to claim 1, a wear-resistant plate is installed on the inner bottom wall of the reactor.

9. The high-pressure reactor according to claim 8, the wear-resistant plate is made of titanium alloy.

10. The high-pressure reactor according to claim 1, the disc disperser stirring paddle is positioned below the liquid level of the compartment, while the propeller stirring paddle is located at the lower part of the compartment.

11. The high-pressure reactor according to claim 10, the driving component comprises a drive motor and a rotating shaft; the rotating shaft is connected to the output shaft of the drive motor, and both the propeller stirring paddle and the disc disperser stirring paddle are installed on the rotating shaft.

12. The high-pressure reactor according to claim 1, the reactor vessel of the reactor is divided into three layers from the inside out: a titanium alloy layer, an iron casting layer, and an insulating layer.

13. The high-pressure reactor according to claim 12, the thickness of the iron casting layer ranges from 30.5 to 95 mm.

14. The high-pressure reactor according to claim 13, the thickness of the titanium alloy layer is between 4 and 30 mm.

15. The high-pressure reactor according to claim 14, the thickness of the insulating layer is between 60 and 140 mm.

16. The high-pressure reactor according to claim 1, the impeller of the propeller stirring paddle has either three or four blades, and the angle of the blades is between 12 and 42 degrees.

17. The high-pressure reactor according to claim 16, the length of the blades is between 400 and 1500 mm.

18. The high-pressure reactor according to claim 17, the rotational speed of the propeller stirring paddle 32 is between 0 and 960 rpm.

19. The high-pressure reactor according to claim 9, the thickness of the wear-resistant plate is between 4 and 30 mm.

## Patentansprüche

1. Hochdruckreaktor, umfassend:
einen Reaktor, der an einem Ende mit einem Zufuhreinlass und einem Abfuhrauslass an dem anderen Ende versehen ist, wobei der Zufuhreinlass zum Einspritzen von Schlamm, Dampf und Säure verwendet wird, während der Abfuhrauslass zum Abführen verwendet wird; innerhalb des Reaktors mehrere Trennplatten nacheinander entlang der Materialfdurchlussrichtung angeordnet sind; diese Trennplatten den Innenhohlraum des Reaktors in mehrere Kammern aufteilen; jede Kammer mit einer Mischvorrichtung ausgestattet ist; die oberen Teile zweier beliebiger benachbarter Kammern miteinander verbunden sind;
einen Zufuhreinlass, der einen Erzbreieinlass, einen Dampfeinlass und einen Säureeinlass umfasst, die sequenziell umlaufend entlang der Rührrotationsrichtung mit der Mischvorrichtung als Achse angeordnet sind; und
eine Mischvorrichtung, die eine Antriebskomponente, einen Propellerrührflügel und einen Scheibendispergier-Rührflügel umfasst; die Antriebskomponente verwendet wird, um die Rotation des Propellerrührflügels und des Scheibendispergier-Rührflügels anzutreiben; der Scheibendispergier-Rührflügel sich oberhalb des Propellerrührflügels befindet; der Propellerrührflügel verwendet wird, um die Materialien zu stören und zu mischen und ihre Aufwärtsbewegung zu fördern; der Scheibendispergier-Rührflügel zu der tangentialen Dispergierung der aufsteigenden Materialien dient.

2. Hochdruckreaktor nach Anspruch 1, wobei der Erzbreieinlass einen ersten Erzbreianschluss in der Nähe des Säureeinlasses und einen zweiten Erzbreianschluss in der Nähe des Dampfeinlasses umfasst.

3. Hochdruckreaktor nach Anspruch 1, wobei eine Turbulenzplatte in der Kammer installiert ist, um den Strömungspfad des inneren Fluids zu stören.

4. Hochdruckreaktor nach Anspruch 3, wobei die Turbulenzplatte auf die den Raum umgebenden Innenwände verteilt ist.

5. Hochdruckreaktor nach Anspruch 4, wobei eine Vielzahl von runden Löchern ungleichmäßig auf der Turbulenzplatte verteilt sind, wobei diese runden Löcher den Schlamm durchströmen lassen.

6. Hochdruckreaktor nach Anspruch 1, wobei die Unterseite der Trennplatte mit Bodenlöchern versehen ist, durch die der Schlamm fließen kann.

7. Hochdruckreaktor nach Anspruch 6, wobei die oberen Höhen mehrerer Trennplatten sequenziell entlang der Materialdurchflussrichtung abnehmen, wodurch die Flüssigkeitsstände mehrerer Kammern sequenziell entlang der Materialdurchflussrichtung abnehmen.

8. Hochdruckreaktor nach Anspruch 1, wobei eine verschleißfeste Platte an der inneren Bodenwand des Reaktors installiert ist.

9. Hochdruckreaktor nach Anspruch 8, wobei die verschleißfeste Platte aus Titanlegierung gefertigt ist.

10. Hochdruckreaktor nach Anspruch 1, wobei sich der Scheibendispergier-Rührflügel unterhalb des Flüssigkeitsstands der Kammer befindet, während sich der Propellerrührflügel an dem unteren Teil der Kammer befindet.

11. Hochdruckreaktor nach Anspruch 10, wobei die Antriebskomponente einen Antriebsmotor und eine rotierende Welle umfasst; die rotierende Welle mit der Abtriebswelle des Antriebsmotors verbunden ist, und sowohl der Propellerrührflügel als auch der Scheibendispergier-Rührflügel auf der rotierenden Welle installiert sind.

12. Hochdruckreaktor nach Anspruch 1, wobei das Reaktorgefäß des Reaktors von innen nach außen in drei Schichten unterteilt ist: eine Titanlegierungsschicht, eine Eisengussschicht und eine Isolierschicht.

13. Hochdruckreaktor nach Anspruch 12, wobei die Dicke der Eisengussschicht von 30,5 bis 95 mm reicht.

14. Hochdruckreaktor nach Anspruch 13, wobei die Dicke der Titanlegierungsschicht zwischen 4 und 30 mm beträgt.

15. Hochdruckreaktor nach Anspruch 14, wobei die Dicke der Isolierschicht zwischen 60 und 140 mm beträgt.

16. Hochdruckreaktor nach Anspruch 1, wobei das Laufrad des Propellerrührflügels entweder drei oder vier Schaufeln aufweist, und der Winkel der Schaufeln zwischen 12 und 42 Grad beträgt.

17. Hochdruckreaktor nach Anspruch 16, wobei die Länge der Flügel zwischen 400 und 1500 mm beträgt.

18. Hochdruckreaktor nach Anspruch 17, wobei die Drehzahl des Propellerrührflügels 32 zwischen 0 und 960 U/min beträgt.

19. Hochdruckreaktor nach Anspruch 9, wobei die Dicke der verschleißfesten Platte zwischen 4 und 30 mm beträgt.

## Revendications

1. Réacteur haute pression, comportant :
un réacteur, qui est pourvu d'une entrée d'alimentation à une extrémité et d'une sortie de décharge à l'autre extrémité, l'entrée d'alimentation est utilisée pour injecter de la boue, de la vapeur et de l'acide, tandis que la sortie de décharge est utilisée pour la décharge ; à l'intérieur du réacteur, plusieurs plaques de séparation sont agencées séquentiellement le long de la direction d'écoulement du matériau ; ces plaques de séparation divisent la cavité intérieure du réacteur en plusieurs compartiments ; chaque compartiment est équipé d'un dispositif de mélange ; les parties supérieures de deux compartiments adjacents quelconques sont reliées ;
une entrée d'alimentation, qui comporte une entrée de pulpe de minerai, une entrée de vapeur et une entrée d'acide qui sont agencées séquentiellement circonférentiellement le long de la direction de rotation d'agitation avec le dispositif de mélange comme axe ; et,
un dispositif de mélange, qui comporte un composant d'entraînement, une palette d'agitation d'hélice et une palette d'agitation de disperseur à disque ; le composant d'entraînement est utilisé pour entraîner la rotation de la palette d'agitation d'hélice et de la palette d'agitation de disperseur à disque ; la palette d'agitation de disperseur à disque est située au-dessus de la palette d'agitation d'hélice ; la palette d'agitation d'hélice est utilisée pour perturber et mélanger les matériaux et favoriser leur mouvement vers le haut ; la palette d'agitation de disperseur à disque est utilisée pour disperser tangentiellement les matériaux se déplaçant vers le haut.

2. Réacteur haute pression selon la revendication 1, l'entrée de pulpe de minerai comporte un premier orifice de pulpe de minerai situé près de l'entrée d'acide et un second orifice de pulpe de minerai situé près de l'entrée de vapeur.

3. Réacteur haute pression selon la revendication 1, une plaque de turbulence est installée à l'intérieur du compartiment pour perturber la trajectoire d'écoulement du fluide interne.

4. Réacteur haute pression selon la revendication 3, la plaque de turbulence est répartie sur les parois internes entourant le compartiment.

5. Réacteur haute pression selon la revendication 4, une pluralité de trous ronds sont répartis de manière inégale sur la plaque de turbulence, ces trous ronds permettent à la boue d'accélérer à travers ceux-ci.

6. Réacteur haute pression selon la revendication 1, le fond de la plaque de séparation est pourvu de trous de fond pour que la boue passe à travers ceux-ci .

7. Réacteur haute pression selon la revendication 6, les hauteurs supérieures de plusieurs plaques de séparation diminuent séquentiellement le long de la direction d'écoulement du matériau, amenant les niveaux de liquide de plusieurs compartiments à diminuer séquentiellement le long de la direction d'écoulement du matériau.

8. Réacteur haute pression selon la revendication 1, une plaque résistante à l'usure est installée sur la paroi inférieure interne du réacteur.

9. Réacteur haute pression selon la revendication 8, la plaque résistante à l'usure est en alliage de titane.

10. Réacteur haute pression selon la revendication 1, la palette d'agitation de disperseur à disque est positionnée en dessous du niveau de liquide du compartiment, tandis que la palette d'agitation d'hélice est située au niveau de la partie inférieure du compartiment.

11. Réacteur haute pression selon la revendication 10, le composant d'entraînement comporte un moteur d'entraînement et un arbre rotatif ; l'arbre rotatif est relié à l'arbre de sortie du moteur d'entraînement, et à la fois la palette d'agitation d'hélice et la palette d'agitation de disperseur à disque sont installées sur l'arbre rotatif.

12. Réacteur haute pression selon la revendication 1, la cuve de réacteur du réacteur est divisée en trois couches de l'intérieur vers l'extérieur : une couche d'alliage de titane, une couche de fonte de fer et une couche isolante.

13. Réacteur haute pression selon la revendication 12, l'épaisseur de la couche de fonte est dans la plage de 30,5 à 95 mm.

14. Réacteur haute pression selon la revendication 13, l'épaisseur de la couche d'alliage de titane est comprise entre 4 et 30 mm.

15. Réacteur haute pression selon la revendication 14, l'épaisseur de la couche isolante est comprise entre 60 et 140 mm.

16. Réacteur haute pression selon la revendication 1, la roue de la palette d'agitation d'hélice présente soit trois, soit quatre pales, et l'angle des pales est compris entre 12 et 42 degrés.

17. Réacteur haute pression selon la revendication 16, la longueur des pales est comprise entre 400 et 1500 mm.

18. Réacteur haute pression selon la revendication 17, la vitesse de rotation de la palette d'agitation d'hélice 32 est comprise entre 0 et 960 tr/min.

19. Réacteur haute pression selon la revendication 9, l'épaisseur de la plaque résistante à l'usure est comprise entre 4 et 30 mm.
